# EUROPÄISCHE PATENTSCHRIFT

(11) **EP 2 465 895 B1**
(45) Veröffentlichungstag und Bekanntmachung des Hinweises auf die Patenterteilung: **16.07.2014**
(21) Anmeldenummer: 10015643.9
(22) Anmeldetag: 15.12.2010
(51) Int. Cl.: C08K 3/00, C08K 3/22, C09J 11/04, C09J 183/00

(54) **Hitzehärtbarer Kleb-, Dicht- und Beschichtungsstoff**
Heat curable adhesive, sealant and coating
Thermodurcissable adhésif, scellement et revêtement

(43) Veröffentlichungstag der Anmeldung: 20.06.2012
(73) Patentinhaber: Merz+Benteli AG, 3172 Niederwangen (CH)
(72) Erfinder: Huber, Stefan, 4900 Langenthal (CH); Burkhardt, Fritz, 3414 Oberburg (CH); Lerf, Claude, 3280 Meyriez (CH)
(74) Vertreter: Fraefel, Christoph

(56) Entgegenhaltungen:
- EP-A1- 1 153 984
- WO-A1-2005/087865
- WO-A1-2007/149613
- WO-A1-2008/007839
- WO-A2-2007/084564
- JP-A- 2007 284 687
- US-A1- 2003 203 991
- US-A1- 2004 018 802

## Beschreibung

Die vorliegende Erfindung betrifft eine Zusammensetzung, die ein durch Feuchtigkeit härtbares, silan-modifiziertes Polymer enthält.

Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon-Kleb- und Dichtstoffen auf der Basis von Dimethylpolysiloxanen sind in letzter Zeit auch verstärkt durch Feuchtigkeit härtbare, silan-modifizierte Polymere eingesetzt worden. Diese weisen wenigstens eine reaktive Alkoxysilylgruppe auf. In Gegenwart von Luftfeuchtigkeit sind silan-modifizierte Polymere bereits bei Raumtemperatur in der Lage, unter Abspaltung der Alkoxygruppe miteinander zu kondensieren. Je nach Gehalt der Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

In EP 1 029 891 wird eine hitzehärtbare Zusammensetzung auf Basis von Polymeren mit Säureanhydridgruppen beschrieben, die im Wesentlichen aus einer Mischung eines Polymers mit Säureanhydridgruppen, einem Molekularsieb, das teilweise mit mindestens einem Amin beladen ist, und einem Füllstoff, der beim Erhitzen auf eine über der Verarbeitungstemperatur der Mischung liegende Temperatur Wasser abgeben kann, besteht. Die Vernetzung des Polymers findet durch das Amin statt.

JP 2000-169698 offenbart eine hitzehärtbare Zusammensetzung auf Basis eines durch Feuchtigkeit härtbaren, silan-modifizierten Polymers. Die Zusammensetzung weist einen schmelzbaren Katalysator auf, der erst oberhalb des Schmelzpunktes aktiv wird. Die Zusammensetzung ist nur bei erhöhten Temperaturen anwendbar.

WO 2008/007839 betrifft ein Bindemittel aus einer Bindemittelzusammensetaung, die eine erste organische Polysiloxan-verbindung, eine zweite organische Verbindung und ein Polysiloxan-absorbierendes aktives Material sowie ein Feuchtigkeit-adsorbierendes Material, wie beispielsweise Calciumoxid, umfasat. Als Anwendungen werden OLED's beschirieben, welche sehr feuchtigkeitsempfindliche, organische Schichten enthalten.

WO 2007/084564 betrifft eine wärmeisolierende, aushärtbare Zusammensetzung, die eine tiefe Gaspermeabilität aufweist und zur Abdichtung von Isolierglasecheiben verwendet wird. Die Zusammensetzung umfasst ein Silanol-terminiertes Di-Organopolysiloxan, eine Verknüpfungsgruppe wie Methylsilikate, einen Katalysator sowie anorganische/organische Nanopartikel, die beispielsweise aus Aluminium-oxid bestehen und dazu dienen, die Gaspermeabilität zu senken. Zusätzlich kann die Zusammensetzung Füllstoffe wie Calciumcarbonat, Metallhydroxide oder Silikate umfassen.

US 2003/203991 beschreibt eine hydrophile Beschichtungszusammeneetzung, die eine wässrige Polymerlösung, ein hydrophiles Polymer, ein kolloidales Metalloxid und eine Verknüpfungagruppe umfasst. Das Metalloxid dient der Verbesserung der Haftungseigenschaften der Beschichtung auf einer Substratoberfläche. Da die Beschichtung wässrige Farblösungen absorbiert, eignet sich das beschichtete Substrat besonders für Druckereianwendungen.

EP 1 153 984 offenbart ein Vergussharz für Halbleiter mit guten Flammschutzeigenschaften, bei welchem Magnesiumoxidpartikel mit definierter Grösse als Füllstoff verwendet werden. Die Magnesiumoxidpartikel dienen einerseits als Flammschutzmittel und sorgen andererseits für eine gute Wärmeleitfähigkeit, dank welcher die Wärme der vergossenen Halbleiterelemente effizient abgeführt werden kann.

US 2004/0018802 beschreibt ein Schleifmittel, das ein teilchenförmiges aushärtbares Bindemittelmaterial sowie abrasive Aluminiumoxidpartikel umfasst und auf einen Träger mit einer teilweise ausgehärteten Grundiermittelbeschichtung aufgetragen wird.

WO 2007/149613 offenbart einen selbstklebenden Haftklebstoff, beispielsweise auf Silikonbasis, mit Flammschutzeigenschaften. Der Haftklebstoff umfasst mindestens ein Metalloxid, mindestens ein Metallhydrat, mindestens ein halogeniertes Material sowie eine flüssige Phosphorbromid-Zusammensetzung. Der Einsatz des Gemischs aus Metalloxiden und Metalloxidhydraten verleiht dem Haftklebstoff seine Flammschutzeigenschaften.

JP 2007/284687 offenbart einen flammhemmende, Organopolysiloxan enthaltenden Silikonklebstoff, in welchem Aluminiumhydroxid-Pulver als Füllstoff verwendet wird, welches unter Hitzeeinfluss Wasser abgibt und dadurch die flammhemmende Eigenschaften verleiht.

WO 2005/087865 offenbart einen feuchtigkeitshärtenden Klebstoff mit Flammschutzeigenschaften. Dieser kann silanterminierte Polymere umfassen und umfasst weiter ein Metallhydroxid sowie ein Calciumcarbonat.

WO 2008/005214 offenbart eine Zusammensetzung, die ein durch Feuchtigkeit härtbares, silan-modifiziertes Polymer sowie einen Inhaltsstoff enthält, der bei erhöhter Temperatur Wasser abgibt. Dieser kann beispielsweise Calciumcarbonat oder ein Molekularsieb sein. Es wird in besagtem Dokument festgehalten, dass flüssiges Wasser, hydratisierte Metallsalze und Kombinationen davon für die Zusammensetzung nicht geeignet seien, da diese einen negativen Effekt auf die Adhäsion der Zusammensetzung haben sollen.

Keine der im Stand der Technik beschriebenen Zusammensetzungen kann über einen breiten Temperaturbereich sowohl als Einkomponenten- als auch als Mehrkomponentensystem formuliert werden.

Ausgehend davon besteht die Aufgabe der vorliegenden Erfindung darin, eine lagerstabile, multifunktionelle Zusammensetzung zur Verfügung zu stellen, die sowohl als Einkomponenten- als auch als Mehrkomponentensystem formuliert sein kann und sowohl bei Raumtemperatur als auch bei erhöhten Temperaturen anwendbar ist.

Die Aufgabe wird durch die Zusammensetzung gemäss Anspruch 1 gelöst. Weitere bevorzugte Ausführungsformen sind Gegenstand der abhängigen Ansprüche 2 bis 16.

Gemäss Anspruch 1 betrifft die Erfindung eine Zusammensetzung enthaltend ein durch Feuchtigkeit härtbares, silan-modifiziertes Polymer, einen Füllstoff, eine wasserabgebende Substanz, die von einer Tensidhülle umgeben ist, sowie ein alkoholbindendes Metalloxid.

Die erfindungsgemässe Zusammensetzung ist als Einkomponentensystem formulierbar. Unter dem Begriff "Einkomponentensystem" wird eine Formulierung verstanden, die vom Anwender ohne Abmischung mit einer weiteren Komponenten verarbeitet werden kann. Die wasserabgebende Substanz ist bei Raumtemperatur durch die Tensidhülle räumlich von dem durch Feuchtigkeit härtbaren, silan-modifizierten Polymer getrennt. Bevor die Zusammensetzung einer (Luft-)Feuchtigkeitsexposition ausgesetzt wird, ist sie trotz der Anwesenheit der wasserabgebenden Substanz lagerstabil.

Bei Anwendung der erfindungsgemässen Zusammensetzung bei erhöhten Temperaturen, d.h. oberhalb 60 °C, besonders bevorzugt oberhalb von 120 °C, insbesondere oberhalb von 150°C, ist die Tensidhülle nicht mehr stabil. Die wasserabgebende Substanz, die bei erhöhten Temperaturen die Tensidhülle durchdringen kann und nahezu homogen in der Dicht- und/oder Klebmasse verteilt ist, setzt Wasser frei. Dieses reagiert mit dem durch Feuchtigkeit härtbaren, silan-modifizierten Polymer unter Abspaltung eines Alkohols. Die erfindungsgemässe Zusammensetzung ermöglicht, dass auch dicke Dicht- und/oder Klebschichten innerhalb kürzester Zeit ausgehärtet sind.

Bei Anwendung der erfindungsgemässen Zusammensetzung bei Raumtemperatur findet die Härtung diffusionskontrolliert statt, d.h. die Feuchtigkeit aus der Luft dringt langsam in die Zusammensetzung ein. Die Anwesenheit der wasserabgebenden Substanz, die durch eine Tensidhülle umgeben ist, stört jedoch den diffusionskontrollierten Prozess nicht.

Mithin ist die erfindungsgemässe Zusammensetzung multifunktionell einsetzbar. Je nach Anwendungsbereich kann zwischen einer langsamen, diffusionskontrollierten Härtung bei Raumtemperatur oder einer schnellen Härtung bei erhöhten Temperaturen unter Einsatz einer Wärmequelle gewählt werden.

Die Aushärtung wird zudem sowohl bei Raumtemperatur als auch bei erhöhten Temperaturen durch die Anwesenheit des alkoholbindenden Metalloxids beschleunigt. Ein weiterer Vorteil ist, dass durch die Absorption des Alkohols eine Bildung von Blasen, die sonst bei der Freisetzung von Alkohol bei erhöhten Temperaturen entstehen, verhindert wird. Dadurch findet keine Volumenvergrösserung statt, was sonst sehr nachteilig ist.

Die Kombination von einer wasserabgebenden Substanz, die von einer Tensidhülle umgeben ist, und einem alkoholbindenden Metalloxid führt zu einer sehr schnellen Härtung und ermöglicht den Einsatz der erfindungsgemässen Zusammensetzung über einen sehr breiten Temperaturbereich.

Nachfolgend werden die Inhaltsstoffe der erfindungsgemässen Zusammensetzung kurz charakterisiert.

### (A) Silan-modifiziertes Polymer

Allen silan-modifizierten Polymeren ist gemeinsam, dass sie nebst einer organischen Polymerkette (auch "Backbone" genannt) mindestens eine hydrolisierbare Silylgruppe aufweisen, die über entsprechende Bindegruppen ("coupling groups") an die Polymerkette gebunden ist. Bei der Kondensationsreaktion wird eine Alkoxygruppe abgespaltet.

Die Eigenschaften entsprechender Dicht- und Klebstoffe sowohl in ihrer pastösen als auch in ihrer ausgehärteten Form werden massgeblich über die Art der Polymerkette des darin enthaltenen silan-modifizierten Polymers beeinflusst.

Das silan-modifizierte Polymer ist dabei vorzugsweise ein silaniertes Copolymer eines Isomono-Olefins und eines vinylaromatischen Polymers, ein silaniertes Copolymer eines Diens und eines vinylaromatischen Monomers, ein silaniertes Copolymer eines Olefins und eines Diens, ein silaniertes Copolymer eines Polyethers und eines Polyacrylats, ein silaniertes Homopolymer eines Isomonoolefins, ein silaniertes Homopolymer eines vinylaromatischen Monomers, ein silaniertes Homopolymer eines Vinylalkohols, ein silaniertes Homopolymer eines Polyethers, ein silaniertes Homopolymer eines Polyurethans, ein silaniertes Homopolymer eines Polyisobutylens, ein silaniertes Homopolymer eines Diens oder ein silaniertes Homopolyer eines Polyacrylates oder Mischungen davon.

Die zu hydrolysierende Silylgruppe ist vorzugsweise eine Alkoxysilylgruppe, insbesondere eine Methoxysilyl- oder eine Ethoxysilylgruppe. Bevorzugt sind die Polymerkette und die Silylgruppe durch eine β-Hydroxyamin-Gruppe miteinander verbunden.

Geeignete Beispiele silanierter Copolymere und Verfahren zu deren Herstellung sind bekannt und sind beispielsweise in EP 0 320 529 (Dow Corning), DE 19,821,356 (Metallgesellschaft), US 4,900,772 (Kaneka), US 4,904,732 (Kaneka), US 5,120,379 (Kaneka), US 5,262,502 (Dow Corning), US 6,380,316 (Dow Corning/Exxon Mobil), US 6,380,316 und 6,177,159 beschrieben.

Besonders bevorzugt ist das durch Feuchtigkeit härtbare, silan-modifizierte Polymer eine Verbindung gemäss Formel (I) : 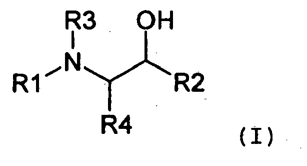 in der
R¹ und R² die Polymerkette oder Silylgruppe einschliesslich eines wahlweise vorhandenden Linkers ist, wobei R¹ ≠ R² ist, und
R³ Wasserstoff oder ein linearer, verzweigter oder cyclischer Kohlenwasserstoffrest ist, welcher wahlweise substituiert sein und/oder ein Heteroatom umfassen und gegebenenfalls mit R¹ einen Ring bilden kann, und
R⁴ Wasserstoff oder ein linearer, verzweigter oder cyclischer Kohlenwasserstoffrest ist, welcher wahlweise substituiert sein und/oder ein Heteroatom umfassen kann.

Die Erfindung umfasst somit sowohl Verbindungen, in denen R¹ die Polymerkette und R² die Silylgruppe ist, als auch Verbindungen, in denen R¹ die Silylgruppe und R² die Polymerkette ist.

Unter dem Begriff "Polymerkette" (auch "Polymer-Backbone" oder "Polymergerüst") sind sowohl unverzweigte als auch verzweigte Polymerketten umfasst. Unter dem Begriff "Silylgruppe" sind jedwelche (Organo-)Silylgruppen, insbesondere auch substituierte Silylgruppen und Silyloxygruppen zu verstehen, wie weiter unten ausgeführt wird. Besonders bevorzugt ist die Silylgruppe ein Alkoxysilyl, insbesondere ein Methoxysilyl oder ein Ethoxysilyl.

Als Linker kommen insbesondere Ether-, Ester-, sekundäre Amino- oder tertiäre Aminogruppen in Frage. Denkbar ist aber auch die Verwendung einer verzweigten oder cyclischen aliphatischen Gruppe oder einer Alkengruppe sowie einer Thioether- oder Thioestergruppe oder eines Aromaten.

R³ kann mit R¹ insbesondere dann einen Ring bilden, wenn R¹ die Polymerkette ist. Im Allgemeinen wird dabei ein 5- oder 6-gliedriger Ring gebildet und im Speziellen ein gegebenenfalls substituierter Piperazin-, Piperidin- oder Pyrrolidin-Ring.

R³ kann insbesondere auch als Rest der Formel (II) vorliegen 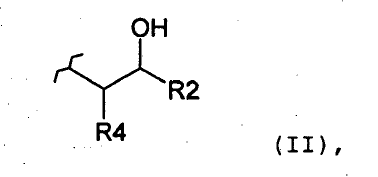 wobei R² und R⁴ die oben genannte Bedeutung haben. Dies ist dann der Fall, wenn ein primäres Amin mit zwei epoxyfunktionalisierten Verbindungen reagiert hat. Denkbar ist insbesondere, dass eine eine primäre Aminogruppe aufweisende Polymerkette mit zwei je eine Epoxidgruppe aufweisenden Silanverbindungen umgesetzt wird, wobei eine Verbindung der Formel (I) resultiert, in der R¹ die Polymerkette ist, R² die Silylgruppe ist und R³ der Formel (II) entspricht.

Wird die polymere Verbindung durch Umsetzung einer eine Aminogruppe aufweisenden Polymerkette mit mindestens einer eine Epoxidgruppe aufweisenden Silanverbindung erhalten, so liegt die bevorzugte Anzahl an Silylgruppen pro polymere Verbindung bei primären Aminogruppen im Allgemeinen zwischen 1 und der doppelten Anzahl an Aminogruppen und bei sekundären Aminogruppen zwischen 1 und der einfachen Anzahl an Aminogruppen.

Vorzugsweise liegt die gemittelte Anzahl Silylgruppen pro polymere Verbindung in einem Bereich von 1 bis 10. Bei einer linearen polymeren Verbindung liegt die Anzahl in der Regel bei ca. 2, bei einer verzweigten polymeren Verbindung in der Regel höher.

Besonders bevorzugt ist das silan-modifizierte Polymer ausgewählt aus der Gruppe von silan-modifizierten Acrylnitril-Butadien-Polymeren der Firma merz + benteli ag, Desmoseal^{®} der Firma Bayer Materials Science (insbesondere Desmoseal^{®} S XP 2458, Desmoseal^{®} XP 2749 und Desmoseal^{®} S XP 2636), Geniosil^{®} der Firma Wacker Chemie AG (insbesondere Geniosil^{®} STP-E10, Geniosil^{®} STP-E15, Geniosil^{®} STP-E30 und Geniosil^{®} STP-E35, silan-terminierten Polyurethanen von Hanse Chemie AG(insbesondere SP XP 48, ST61, ST75 und ST77) und Silquest^{®} von Momentive Performance Materials Inc. (insbesondere SPUR+1015LM, SPUR+1050MM, SPUR+1010LM, SPUR+3100HM, SPUR+3200HM, MS-Polymeren von Kaneka Corporation (insbesondere MS-203, MS-303, SAX260, SAX350, SAX400, SAX 220, S154, S327, S227, SAX725, SAX510, SAX520, SAX530, SAX580, SAT010, SAX015, SAX770, SAX220, SAX115, (Polyether Backbone)), MAX-Polymeren von Kaneka Corporation (insbesondere MAX602, MAX923, MAX951, MA451, MA850 (Polyether/Polyacrylat Backbone)), XMAP Polymere von Kaneka Corporation (insbesondere SA100S-N-DR, SA110S-N-DR, OR100S (Polyarylate Backbone) und Epion von Kaneka Corporation (insbesondere EP100S und EP303S (Polyisobutylen-Backbone). Die erfindungsgemässe Zusammensetzung enthält vorzugsweise 5 bis 60 Gew.%, besonders bevorzugt 25 bis 40 Gew.% des durch Feuchtigkeit härtbaren, silan-modifizierten Polymers.

### (B) Wasserabgebende Substanz, die von einer Tensidhülle umgeben ist

Die erfindungsgemässe Zusammensetzung enthält ausserdem eine wasserabgebende Substanz, die von einer Tensidhülle umgeben ist. Durch die Tensidhülle kommt die wasserabgebende Substanz während der Lagerung nicht in Kontakt mit dem durch Feuchtigkeit härtbaren, silanmodifizierten Polymer. Dies hat zur Folge, dass die erfindungsgemässe Zusammensetzung ausgesprochen lagerstabil ist.

Als wasserabgebende Substanz eignen sich insbesondere hydratisierte Metallsalze oder Salze, die Kristallwasser enthalten.

Bevorzugte hydratisierte Metallsalze oder Salze die Kristallwasser enthalten sind ausgewählt aus der Gruppe von Al₂O₃ x H₂O, Al₂(SO₄)₃ x 18H₂O, Al₂ (C₂O₄) ₃ x 4H₂O, AlNa (SO₄) ₂ x 12H₂O, AlK(SO₄) ₂ x 12H₂O, BaCl₂ x 2H₂O, Ba(OH)₂ x 8H₂O, CaSO₄ x 2H₂O, CaS₂O₃ x 6H₂O, Ca(NO₃)₂ x 4H₂O, CaHPO₄ x 2H₂O, Ca(C₂O₄₎ x H₂O, Ca(CH₃-CH (OH) -COO) ₂ x 5H₂O, Co (NO₃) ₂ x 6H₂O, Co(CH₃COO) ₂ x 4H₂O, CuCl₂ x 2H₂O, CuSO₄ x 5H₂O, Cu(CH₃COO)₂ x 2H₂O, FeCl₂ x 4H₂O, FeCl₃ x 6H₂O, FeSO₄ x 7H₂O, Fe(NH₄)(SO₄) ₂ x 12H₂O, K₂CO₃ x 15H₂O, KNaCO₃ x 6H₂O, LiBr x 2H₂O, Li₂SO₄ x H₂O, MgSO₄ x H₂O, MgSO₄ x 7H₂O, MgHPO₄ x 7H₂O, Mg₃(PO₄)₂ x 8H₂O, MgCO₃ x 3H₂O, Mg₄(CO₃)₃(OH)₂ x 3H₂O, MoO₃ x 2H₂O, NaBr x 2H₂O, Na₂SO₃ x 7H₂O, Na₂SO₄ x 10H₂O, Na₂S₂O₃ x 5H₂O, Na₂S₂O₆ x 2H₂O, Na₂B₄O₇ x 10H₂O, NaHPO₄ x 5H₂O, Na₃PO₄ x 12H₂O, Na₂CO₃ x H₂O, Na₂CO₃ x 7H₂O, Na₂CO₃ x 10H₂O, NaCH₃COO x 3H₂O, NaHC₂O₄ x H₂O, Na₂SiO₃ x 9H₂O, NiSO₄ x 6H₂O, NiC₂O₄ x 2H₂O, SnO₂ x nH₂O, NiC₂O₄ x 2H₂O, Sn(SO₄) ₂ x 2H₂O, ZnSO₃ x 2H₃O, ZnSO₄ x 7H₂O, Zn₃(PO₄)₂ x 4H₂O und Zn(CH₃COO)₂ x 2H₂O oder Mischungen davon. Besonders bevorzugt ist dabei CaHPO₄ x 2H₂O, NaHP04 x 2H₂O, LiH2P04, MgSO₄ x 6H₂O, MgHP04 x 3H₂O, Na2S04 x 10H₂O sowie Na2C03 x 10H₂O.

Die Tensidhülle, welche die wasserabgebende Substanz während der Lagerung von dem durch Feuchtigkeit härtbaren, silanmodifizierten Polymer räumlich trennt, ist vorzugsweise ausgewählt aus der Gruppe von einem Salz aus einem anorganischen oder organischen Kation und einem anionischen Tensid, einem nichtionischen Tensid, einem zwitterionischen Tensid oder einem Salz aus einem kationischen Tensid und einem anorganischen oder organischen Anion. Unter dem Begriff "anionisches Tensid" wird ein Tensid verstanden, das eine negativ geladene funktionelle Gruppe besitzt. Diese ist vorzugsweise ein Carboxylat, ein Sulfonat oder ein Sulfat. Der unpolare Teil des Tensides ist ein gesättiger oder ungesättigter, vorzugsweise linearer Alkylrest mit einer Kettenlänge von wenigstens 8 Kohlenstoffatomen, vorzugsweise 12 bis 18, der optional substituiert sein kann.

Anorganische Kationen sind vorzugsweise ausgewählt aus der Gruppe von Lithium, Magnesium, Natrium, Kalium, Calcium, Barium und Zink. Organische Kationen sind vorzugsweise primäre, sekundäre, tertiäre und quartäre Ammoniumionen. Anorganische Anionen sind vorzugsweise ausgewählt aus der Gruppe von Fluorid, Chlorid und Bromid. Organische Anionen sind vorzugsweise Carboxylate.

Ein solches Salz aus einem anorganischen oder einem organischen Kation und einem anionischen Tensid kann beispielsweise ein Fettsäuresalz sein. Besonders bevorzugt ist das Fettsäuresalz ausgewählt aus der Gruppe bestehend aus Lithiumstearat, Magnesiumstearat, Natriumstearat, Kaliumstearat, Calciumlaurat, Calciumricinoleat, Calciumstearat, Bariumlaurat, Bariumricinoleat, Bariumstearat, Zinkoctoat, Zinklaurat, Zinkricinoleat und Zinkstearat oder Mischungen davon. Besonders bevorzugt ist Lithiumstearat.

Bevorzugte kationische Tenside sind beispielsweise sogenannte QUAD-Tenside wie Dodecyltrimethylammoniumbromid, Didodecyldimethylammoniumbromid, Dimethyldioctadecylammoniumbromid, Dodecylethyldimethylammoniumbromid, Hexadecylpyridiniumbromid, Hexadecyltrimethylammoniumbromid oder ähnliche.

Geeignete nichtionische Tenside sind beispielsweise Polyoxyethylenstearat, Polyoxyehtylenlaurylether, Polyoxyethylenoleylether, Dimethyldecylphosphinooxid oder ähnliche. Geeignete zwitterionische Tenside sind beispielsweise Dimethylethylammoniumpropansulfonat, n,n-Dimethyl-N-dodecylglycinbetain, N-Dodecyl-N,N-(dimethyl-amino)butyrat oder ähnliche.

Die erfindungsgemässe Zusammensetzung enthält vorzugsweise 0.5 bis 5 Gew.%, besonders bevorzugt 0.5 bis 2 Gew.% der wasserabgebenden Substanz. Die Tensidhülle macht dabei bevorzugt 0.1 bis 50 Gew.% der wasserabgebenden Substanz aus. Der Effekt kann bereits mit einer Monoschicht des Tensides erreicht werden.

### (C) Alkoholbindendes Metalloxid

Die erfindungsgemässe Zusammensetzung enthält ausserdem ein alkoholbindendes Metalloxid. Dabei wird der Alkohol vorzugsweise durch Chemisorption gebunden, d.h. der Alkohol wird kovalent an die Oberfläche des Metalloxids gebunden. Dadurch wird der bei der Hydrolyse der (Alkoxy)-Silanpolymere, Haftsilane und Trocknungssilane frei werdende Alkohol gebunden. Gerade auch bei höheren Temperaturen ist die Dicht- und/oder Klebstoffmasse im Wesentlichen frei von Blasen, wie sie konventionellerweise bei der Abspaltung des Alkohols entstehen können, und das Volumen bleibt während der Reaktion konstant. Die erfindungsgemässe Zusammensetzung hat damit den Vorteil, dass der Alkohol nicht mehr an die Umgebung abgegeben wird, was insbesondere bei Methanol wegen dessen Giftigkeit nachteilig wäre. Dadurch ist es möglich, eine emissionslose, VOC freie Dicht- und/oder Klebstoffzusammensetzung zur Verfügung zu stellen, was insbesondere von Allergikern sehr geschätzt wird. Dies ist insbesondere für Innenanwendungen wichtig, da weder während der Aushärtung noch während der Funktion eine Belastung des Raumklimas stattfindet. Vorzugsweise ist das alkoholbindende Metalloxid ausgewählt aus der Gruppe von Aluminiumoxid, Magnesiumoxid, Zinkoxid, Bariumoxid, Zirkonoxid oder Siliciumoxid oder modifizierte Aluminium-Magnesium und Zinkoxide.

Das alkoholbindende Metalloxid kann gleichzeitig als Füllstoff dienen.

Die erfindungsgemässe Zusammensetzung enthält vorzugsweise 2 bis 20 Gew.%, besonders bevorzugt 5 bis 15 Gew.% des alkoholbindenden Metalloxids. Falls kein weiterer Füllstoff in der Zusammensetzung enthalten ist und das alkoholbindende Metalloxid zusätzlich die Funktion des Füllstoffes übernimmt, enthält die erfindungsgemässe Zusammensetzung 5 bis 60 Gew.% des alkoholbindenden Metalloxids.

Besonders bevorzugt ist dabei Aluminiumoxid. Durch die Chemisorption des Alkohols kann dabei wie folgt Wasser abgespalten werden:

Al₂O₃ + 6ROH -> 2Al(OR) ₃ + 3H₂O,

wobei R vorzugsweise Methyl oder Ethyl ist.

Die durch die Reaktion frei werdenden Wassermoleküle führen dazu, dass das durch Feuchtigkeit, und damit durch Wasser härtbare, silan-modifizierte Polymer schneller gehärtet wird. Insbesondere bei der Anwendung bei Raumtemperatur ist es von Vorteil, weitere Wassermoleküle zur Verfügung zu haben, um so die Tiefenhärtung zu beschleunigen.

Das Aluminiumoxid liegt besonders bevorzugt in der γ- , δ -oder in der η-Modifikation oder als γ-AlO(OH) oder in einer Mischung davon vor. Es wird dadurch erhalten, dass Aluminium-Trihydrat bei 350° bis 650°C erhitzt wird. Es unterscheidet sich von herkömmlichem Aluminiumoxid dadurch, dass das Aluminium-Trihydrat bei wesentlich tieferen Temperaturen behandelt wird als dies bei der Gewinnung von herkömmlichem Aluminiumoxid der Fall ist. Mit der γ- und/oder der δ- und/oder der η-Modifikation des Aluminiumoxids wird eine besonders gute Chemisorption erzielt.

### (D) Füllstoffe

In einer weiteren Ausführungsform enthält die erfindungsgemässe Zusammensetzung zusätzlich Füllstoffe. Mit den Füllstoffen, die anorganischer oder organischer Natur sein können, kann die Thixotropie, Härte und Festigkeit der erfindungsgemässen Zusammensetzung eingestellt werden. Die Zusammensetzung kann auch Mischungen verschiedener Füllstoffe enthalten.

Bevorzugte anorganische Füllstoffe sind Quarzmehl, gefälltes oder natürliches Bariumsulfat, Titandioxid, gefälltes oder natürliches Calciumcarbonat (zum Beispiel Kreide), Calciummagnesiumcarbonat (beispielsweise Dolomit), gefälltes oder natürliches Kaolin, Talkum, Zinkoxid, Zirkoniumsalze, Glaskugeln oder Mikrohohlkugeln aller Art. Besonders bevorzugt sind Calciumcarbonat und Calciummagnesiumcarbonat.

Bevorzugte organische Füllstoffe sind beispielsweise Harze auf Kohlenwasserstoff- oder Kolophonium-Basis, Tallharz, Balsamharz, Terpene, Oligomere, wie zum Beispiel Butylene, Acrylate oder andere vinylbasierte Moleküle mit einem relativ niedrigen Molekulargewicht, Urethane oder Ester mit relativ niedrigem Molekulargewicht oder polymere Weichmacher auf Polyesterbasis, z. B. Benzoflex. Als organische Füllstoffe sind auch polymere Füllstoffe geeignet, wie zum Beispiel Schlagzähigkeitsmodifikatoren, Kunststofffasern oder Kunststoffpulver aus zum Beispiel Polyacrylat, Polystyrol, Polyester, Polyamid, Polyurethan, Polyvinylchlorid, Polyolefin, Polyvinylacetat, Polyisopren oder Poly(iso)butylen sowie Blockcopolymere davon.

Die erfindungsgemässe Zusammensetzung enthält vorzugsweise 10 bis 60 Gew.%, besonders bevorzugt 25 bis 40 Gew.% des Füllstoffs.

### (E) Chemisches Trocknungsmittel

In einer weiteren Ausführungsform enthält die erfindungsgemässe Zusammensetzung zusätzlich ein chemisches Trocknungsmittel. Unter dem Ausdruck "chemisches Trocknungsmittel" wird eine Substanz oder ein Substanzgemisch verstanden, das mit einer Flüssigkeit, insbesondere mit Wasser, reagiert oder Hydrate bildet. Idealerweise spaltet dabei das Trocknungsmittel keinen Alkohol ab, so dass eine unerwünschte Blasenbildung ausbleibt. Wird ein chemisches Trocknungsmittel eingesetzt, welches bei der Trocknung Alkohol abspaltet, muss die Menge an alkoholbindendem Metalloxid entsprechend erhöht werden. Für Anwendungsbereiche bei erhöhten Temperaturen bindet das Trocknungsmittel vorzugsweise bei Raumtemperatur Wasser sehr gut, um sicherzustellen, dass die Zusammensetzung lagerstabil ist. Bei erhöhten Temperaturen bindet das Trocknungsmittel das Wasser nur noch in geringem Masse, so dass das Wasser für die Hydrolyse der silan-modifizierten Polymere zur Verfügung steht. Dies ist beispielsweise möglich, wenn das Trocknungsmittel ab einem Sättigungspunkt kein weiteres Wasser mehr bindet oder bei Raumtemperatur schneller mit dem Wasser reagiert als das Polymer und bei erhöhten Temperaturen langsamer. Vorzugsweise wird das chemische Trocknungsmittel ausgewählt aus der Gruppe bestehend aus Phosphorsäureanhydrid, Vinyltris(methylisobutyl-ketoximino)silan, Vinyltrimethoxysilan, Dimethyldimethoxysilan, Methyltrimethoxysilan, Methyltriethoxysilan, ein Tetramethoxysilan, ein Tetraethoxysilan, Phenyltrimethoxysilan, Silanverbindungen wie Diphenyldimethoxysilan, Calciumoxid, Natriumoxid, Kaliumoxid, Magnesiumoxid, Zement, Silicagel, Methyl-Oximino-Silane, Vinyl-Oximino-Silane, Amino-Oximino-Silane, Methyl tris(ketoximino)silane, Vinyl tris(ketoximino)silane, Amin tris(ketoximino)silane, Anhydride und Isocyanate sowie Kombinationen davon.

In dieser Ausführungsform enthält die erfindungsgemässe Zusammensetzung vorzugsweise bis zu 10 Gew.%, besonders bevorzugt 2 bis 5 Gew.% des chemischen Trocknungsmittels.

### (F) Haftvermittler

In einer weiteren Ausführungsform enthält die erfindungsgemässe Zusammensetzung zusätzlich einen Haftvermittler. Der Haftvermittler dient als Verbindung zwischen der Dicht- und/oder Klebmasse und dem Substrat. Bevorzugt liegt der Siedepunkt des Haftvermittlers deutlich über der Härtungstemperatur, denn so kann eine unerwünschte Blasenbildung vermieden werden.

In einer Ausführungsform kann der Haftvermittler beispielsweise ein Polyisobutylen enthalten. Solche Haftvermittler sind vorzugsweise ausgewählt aus der Gruppe von Oppanol^{®} (von BASF, Deutschland), Parleam^{®} RV (Polysynlane SV, von NOF Corporation Functional Chemical and Polymers, Japan), und Vistancex^{®} (von BASF, Deutschland) (beispielsweise MML-80, MML-100, MML 120 und MML-140).

Der Haftvermittler liegt insbesondere dann, wenn eine aminofunktionalisierte Polymerkette zur Umsetzung mit einer epoxyfunktionalisierten Silanverbindung vorliegt, vorzugsweise als geschütztes Aminosilan, als Ketiminsilan, vor. Durch den Ersatz der konventionellerweise als Haftvermittler eingesetzten Aminosilanen durch ein Silan mit einer blockierten oder geschützten Aminfunktion, welche durch Hydrolyse freigesetzt wird, also z.B. ein Kentiminsilan, wird somit eine gezielte Reaktion zwischen der Polymerkette und der hydrolysierbaren Organosilanverbindung gewährleistet. Besonders bevorzugt sind oligo-Silane wie beispielsweise Dynasylane der Firma Evonik (insbesondere Dynasylan® 1146, 6490 und 6495 - diese Verbindungen haben auch den Vorteil, dass sie kleinere Mengen an Alkohol abspalten, da ein Teil der Bindungen bereits hydrolysiert vorliegt), bis-Silane (Moleküle mit zwei Silangruppen (insbesondere Dynasylan® 1122, 1124 und 1505 mit einem Siedepunkt > 200°C) 2-(Aminoethyl)-3-Aminopropyltrimethoxysilan (Genosil^{®} GF 9) der Firma Wacker, und 2-(Aminoethyl)-3-aminopropylmethyldimethoxysilan (Genosil^{®} GF95) der Firma Wacker. Dimethoxysilane haben zusätzlich den Vorteil, dass sie weniger Methanol abspalten als Trimethoxysilane.

In vorliegenden Ausführungsform enthält die erfindungsgemässe Zusammensetzung vorzugsweise bis zu 5 Gew.%, besonders bevorzugt 0.1 bis 1 Gew.% des Haftvermittlers.

### (G) Katalysator

In einer weiteren Ausführungsform kann die erfindungsgemässe Zusammensetzung zusätzlich einen Katalysator enthalten, um die Aushärtung zu beschleunigen. Geeignete Katalysatoren umfassen beispielsweise Zinn(IV)-Verbindungen, Zinn(II)-Verbindungen, Titanate, Zirkonate, Bismuth- und Zinkverbindungen. Besonders bevorzugt sind Katalysatoren ausgewählt aus der Gruppe von Zinndilaurat, Dimethylzinndialurat, Di-(n-butyl)-Zinn-bis-ketonat, Dibutylzinndiacetat, Dibutylzinnmaleat, Dibutylzinndiacetylacetonat, Dioctylzinndiacetylacetonat, Dibutylzinndiketanoat, Isobutylzinntriceroacetat, Dimethylzinndibutyrat, Dimethylzinndineodecanoat, Triethylzinntartrat, Dibutylzinndibenzoat, Butylzinntri-2-ethylhexoat, Dioctylzinndiacetal, Zinnoctylat, Zinnoleat, Zinnbutyrat, Zinnnaphthenat, Dimethylzinndichlorid, Zinn(II)diacetat, Zinn(II)dioctanoat, Zinn(II)diethylhexanoat, Zinn(II)dilaurat, Zinnsalze wie Zinnoactanoat, Zinnoleat, Zinnacetat, Zinnlaureat, 1,3-Propandioxytitanbis(ethylacetoacetat), 1,3-Propandioxytitanbis(actylacetonat), Diisopropoxy-titanbis(acetylacetonat), 2,3-Diisopropoxy-bis(ethylacetat)titan, Titannaphthenat, Tetrapropyltitanat, Tetrabutyltitanat, Tetraethylhexyltitanat, Tetraphenyltitanat, Tetraoctadecyltitanat, Tetrabutoxytitanium, Tetraisopropoxytitanium, Ethyltriethanolamintitanat, AminKatalysatoren wie 1,8-Diazabicyclo[5.4.0]undec-7-ene (DBU), 1,5-Diazabicyclo[4.3.0]non-5-ene (DBN), Phenylguanidin, Tolylbiguanid, eine Kombination aus einem Amin und einer Säure, Betadicarbonylverbindungen wie Bis(Acetylacetonyl)diisopropyltitanat oder Kombinationen davon.

In dieser Ausführungsform enthält die erfindungsgemässe Zusammensetzung vorzugsweise bis zu 5 Gew.%, besonders bevorzugt 0.05 bis 1 Gew.% des Katalysators.

### (H) Weichmacher

In einer weiteren Ausführungsform enthält die erfindungsgemässe Zusammensetzung zusätzlich einen Weichmacher, durch den die Dicht- und/oder Klebmasse weicher und elastischer wird. Der Weichmacher ist bevorzugt ausgewählt aus der Gruppe von Phthalaten, wie Dioctylphthalat, Diisononylphthalat, Diisodecylphthalat, Diisoundecylphthtalat und Diisotridecylpthalat; Mischphthalaten, insbesondere von Benzyltypen; Adipin- und Sebacinsäureester wie Dioctyladipat und Dioctylsebacat; Fettsäureestern; und Phosphaten, wie Tricresylphosphat; epoxidierten Sojaölen oder Leinölen; Benzoesäureestern und Sulfonsäureestern, Acrylatweichmacher, wie beispielsweise Arufon UP-1000, Ester der Cyclohexandicarbonsäure, wie beispielsweise 1,2-Cyclohexandicarbonsäurediisononylester.

In dieser Ausführungsform enthält die erfindungsgemässe Zusammensetzung vorzugsweise bis zu 30 Gew.%, besonders bevorzugt 10 bis 20 Gew.% des Weichmachers.

In einer weiteren Ausführungsform enthält die erfindungsgemässe Zusammensetzung keine Phthalate, keine Zinnverbindungen, keine VOC (flüchtige organische Lösungsmittel) und keine SVOC (halbflüchtige organische Lösungsmittel). Durch die Abwesenheit dieser Substanzen in Kombination mit der Tatsache, dass die freiwerdenden Alkoholmoleküle chemisorbiert werden, ist die erfindungsgemässe Zusammensetzung frei von kritischen oder gesundheitsgefährdenden Inhaltsstoffen oder von Inhaltsstoffen, die in Verdacht stehen, gesundheitsschädigende Eigenschaften zu haben, was insbesondere von Allergikern geschätzt wird.

Die optionalen Inhaltsstoffe, d.h. chemisches Trocknungsmittel, Haftvermittler, Katalysator und Weichmacher sowie weitere übliche Inhaltsstoffe wie Licht-und Oxidationsschutzmittel, Wachse und weitere können je nach Anwendungsgebiet einzeln oder in Kombination in der erfindungsgemässen Zusammensetzung enthalten sein.

Die erfindungsgemässe Zusammensetzung kann als Einkomponentensystem oder als Zweikomponentensystem formuliert werden. Sowohl Einkomponentensysteme als auch Zweikomponentensysteme können als Kleb- und/oder Dicht- und/oder Beschichtungsstoff eingesetzt werden.

Das Einkomponentensystem kann durch ein Verfahren hergestellt werden, in dem die verschiedenen Inhaltsstoffe, vorzugsweise unter Vakuum oder trockenem Inertgas oder beidem, miteinander gemischt werden. Die Anwendung eines solchen Einkomponentensystems kann bei Raumtemperatur oder bei erhöhter Temperatur erfolgen. Während die Härtung bei der Zusammensetzung bei Raumtemperatur diffusionskontrolliert erfolgt, wird bei erhöhter Temperatur die durch die Tensidhülle umgebene wasserabgebende Substanz freigesetzt, da die Tensidhülle destabilisiert, und damit geöffnet wird. Das so frei werdende Wasser führt zu einer sehr effizienten und schnellen Härtung der Dicht- und/oder Klebstoffzusammensetzung. Dies ermöglicht beispielsweise eine sehr schnelle Härtung.

Alternativ kann die erfindungsgemässe Zusammensetzung als Mehrkomponentensystem formuliert werden, wobei dies vorzugsweise ein Zweikomponentensystem ist. Die Komponente A enthält dabei einen Teil des durch Feuchtigkeit härtbaren, silan-modifizierten Polymers, das alkoholbindende Metalloxid sowie den gegebenenfalls enthaltenen Katalysator. Die Komponente B enthält den restlichen Teil des durch Feuchtigkeit härtbaren, silan-modifizierten Polymers sowie die wasserabgebende Substanz, die von einer Tensidhülle umgeben ist. Der Füllstoff sowie die übrigen optional enthalten Inhaltsstoffe können entweder in Komponente A oder in Komponente B oder in beiden enthalten sein.

Aufgrund der schnellen Härtung, insbesondere bei erhöhten Temperaturen, eignet sich die erfindungsgemässe Zusammensetzung insbesondere in Anwendungsgebieten, in denen die schnelle Härtung zentral ist. Insbesondere bei Verklebungen, wo durch einen reduzierten oder unterbundenen Zutritt von Luftfeuchtigkeit ansonsten die Härtung mangelhaft wäre, ist die erfindungsgemässe Zusammensetzung ideal. Dies sind etwa Flächenabdichtungen in der Bauindustrie und Anwendungen im Fahrzeugbau. Denkbar ist aber auch die Verwendung im Schiffsbau oder in elektronischen Anwendungen. Ein besonders bevorzugter Anwendungsbereich der erfindungsgemässen Zubereitung ist in einem Fertigungsprozess, welcher per se eine erhöhte Temperatur benötigt und vor- oder nachgeschaltet einen Klebe- oder Dichtungsprozess benötigt. Die beiden Prozesse können somit kombiniert werden, was kürzere Prozesszeiten und tiefere Prozesskosten zur Folge hat. Ein Beispiel dafür ist die Einbrennlackierung. Durch den schnellen Festigkeitsaufbau nach Erwärmung wird ermöglicht, dass der nachfolgende Prozess schneller eingeleitet werden kann. Zusätzlich kann das verklebte Material nach kurzer Zeit bereits transportiert werden, was wiederum zu kürzeren Prozesszeiten und tieferen Prozesskosten führt.

Besonders bevorzugt wird die erfindungsgemässe Zusammensetzung für Cure-in-Place-Dichtungen verwendet, d.h. für Dichtungen, die an Ort und Stelle aufgebracht werden und dort innerhalb von Minuten aushärten sollen. Beispiele hierfür sind Brennstoffzellen, Unterwassergehäuse, Elektronikbereich, Heizungs-, Lüftungs- und Klimaanlagen, Verkleidungen im Fahrzeugbau, Abdichtungen gegen Feuchtigkeit im Fahrzeugbau, Lautsprecherboxen, Kabel-Abzweigdosen und Gehäuse für Haushaltsgeräte.

Ein weiterer bevorzugter Anwendungsbereich ist die Verwendung der erfindungsgemässen Zusammensetzung zusammen mit Komponenten, die verklebt und mit einer Einbrennlackierung versehen werden, da dieser Verfahrensschritt dann gemeinsam durchgeführt werden kann.

### Beispiel

### A. Herstellung der wasserenthaltenden Paste

40g CaHPO₄ x 2H₂O werden mit 20g Lithiumstearat in 40g Diisodecylphthalat gemischt bis eine Paste erhalten wird.

### B. Herstellung des aktiven Aluminiumoxids (γ-,δ-, η-Al₂O₃ oder γ-AlO(OH))

1000g eines Aluminiumtrihydrates Al(OH)₃ werden während 3h bei 450°C erhitzt.

### C. Herstellung des hitzehärtenden Kleb- und Dichtstoff

340g silan-modifiziertes Polymer (Kaneka MS 303) werden mit 110g Diisodecylphthalat, 340g Microdol Al (Dolomit), 135g des unter B erhaltenen aktiven Aluminiumoxids und 10g CaO unter Vakuum gemischt. Dazu werden unter Vakuum 39g Vinyl tris(methylisobutylketoxim) und 25g der unter A erhaltenen Paste eingemischt. Als letztes werden 5g Dynasylan 1146 und 3g Härtungskatalysator (z.B. TIB-KAT 226) unter Vakuum eingemischt und die Mischung in eine luftdichte Verpackung (z.B. Kartusche oder Beutel) eingefüllt. Der erhaltene, lagerstabile Kleb- und Dichtstoff kann bei 170°C während 20 min gehärtet werden.

Alternativ kann auf die Vormischung der wasserenthaltenden Paste verzichtet werden und die einzelnen Inhaltsstoffe anstelle der Paste in den Kleb- und Dichtstoff eingerührt werden.

## Patentansprüche

1. Zusammensetzung, enthaltend:
(A) ein durch Feuchtigkeit härtbares, silanmodifiziertes Polymer;
(B) eine wasserabgebende Substanz, die von einer Tensidhülle umgeben ist; und
(C) ein alkoholbindendes Metalloxid.

2. Zusammensetzung gemäss Anspruch 1, **dadurch gekennzeichnet, dass** die wasserabgebende Substanz ein hydratisiertes Metallsalz ist.

3. Zusammensetzung gemäss einem der vorangehenden Ansprüche, **dadurch gekennzeichnet, dass** die Tensidhülle ausgewählt ist aus der Gruppe von einem Salz aus einem anorganischen oder organischen Kation und einem anionischen Tensid, einem nichtionischen Tensid, einem zwitterionischen Tensid oder einem Salz aus einem kationischen Tensid und einem anorganischen oder organischen Anion.

4. Zusammensetzung gemäss Anspruch 3, **dadurch gekennzeichnet, dass** das Salz aus einem anorganischen oder organischen Kation und einem anionischen Tensid ein Fettsäuresalz ist.

5. Zusammensetzung gemäss Anspruch 4, **dadurch gekennzeichnet, dass** das Fettsäuresalz ausgewählt ist aus der Gruppe von Lithiumstearat, Magnesiumstearat, Natriumstearat, Kaliumstearat, Calciumlaurat, Calciumricincleat, Calciumstearat, Bariumlaurat, Bariumricinoleat, Bariumstearat, Zinkoctoat, Zinklaurat, Zinkricinoleat und Zinkstearat.

6. Zusammensetzung gemäss einem der vorangehenden Ansprüche, **dadurch gekennzeichnet, dass** das Fettsäuresalz Lithiumstearat ist.

7. Zusammensetzung gemäss einem der vorangehenden Ansprüche, **dadurch gekennzeichnet, dass** das alkoholbindende Metalloxid Aluminiumoxid oder Magnesiumoxid ist.

8. Zusammensetzung gemäss Anspruch 7, **dadurch gekennzeichnet, dass** das Aluminiumoxid in der γ-,in der δ- oder in der η-Modifikation, als γ-AlO(OH) oder in einer Mischung davon vorliegt.

9. Zusammensetzung gemäss einem der vorangehenden Ansprüche, **dadurch gekennzeichnet, dass** die Zusammensetzung zusätzlich einen Füllstoff enthält.

10. Zusammensetzung gemäss einem der vorangehenden Ansprüche, **dadurch gekennzeichnet, dass** das durch Feuchtigkeit härtbare, silan-modifizierte Polymer eine Polymerkette und mindestens eine an die Polymerkette gebundene Alkoxysilylgruppe, vorzugsweise eine Methoxysilyl- oder eine Ethoxysilylgruppe, umfasst.

11. Zusammensetzung gemäss einem der vorangehenden Ansprüche, **dadurch gekennzeichnet, dass** das durch Feuchtigkeit härtbare, silan-modifizierte Polymer eine Polymerkette und mindestens eine an die Polymerkette gebundene Silylgruppe umfasst, wobei die Polymerkette und die Silylgruppe durch eine β-Hydroxyamin-Gruppe miteinander verbunden sind.

12. Zusammensetzung gemäss Anspruch 11, **dadurch gekennzeichnet, dass** das silan-modifizierte Polymer die Formel (I) aufweist: 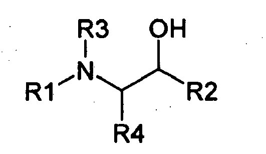 in der
R¹ und R² die Polymerkette oder Silylgruppe einschliesslich eines wahrweise vorhandenen Linkers ist, wobei R¹ ≠ R² ist,
R³ Wasserstoff oder ein linearer, verzweigter oder cyclischer Kohlenwasserstoffrest ist, welcher wahlweise substituiert sein und/oder ein Heteroatom umfassen und gegebenenfalls mit R¹ einen Ring bilden kann, und
R⁴ Wasserstoff oder ein linearer, verzweigter oder cyclischer Kohlenwasserstoffrest ist, welcher wahlweise substituiert sein und/oder ein Heteroatom umfassen kann.

13. Zusammensetzung gemäss einem der vorangehenden Ansprüche, **dadurch gekennzeichnet, dass** die Zusammensetzung frei ist von Phthalat, Zinnverbindungen, VOC und/oder SVOC.

14. Verwendung der Zusammensetzung gemäss einem der Ansprüche 1 bis 13 als Einkomponenten-Kleb- und/oder Dicht- und/oder Beschichtungsstoff.

15. Verwendung der Zusammensetzung gemäss einem der Ansprüche 1 bis 13 als Zweikomponenten-Kleb- und/oder Dicht- und/oder Beschichtungsstoff.

16. Verwendung gemäss Anspruch 15, wobei
die Komponente A einen Teil des silan-modifizierten Polymers, das alkoholbindende Metalloxid und wahlweise keinen, einen Teil oder den gesamten Füllstoff enthält, und
die Komponente B den Rest des silan-modifizierten Polymers, die wasserabgebende Substanz, die von einer Tensidhülle umgeben ist, und wahlweise keinen, einen Teil oder den gesamten Füllstoff enthält.

## Claims

1. Composition comprising:
(A) a moisture-curable, silane-modified polymer;
(B) a water donor substance surrounded by a surfactant shell; and
(C) an alcohol-binding metal oxide.

2. Composition according to Claim 1, **characterized in that** the water donor substance is a hydrated metal salt.

3. Composition according to either of the preceding claims, **characterized in that** the surfactant shell is selected from the group consisting of a salt of an inorganic or organic cation and an anionic surfactant, a nonionic surfactant, a zwitterionic surfactant, or a salt of a cationic surfactant and an inorganic or organic anion.

4. Composition according to Claim 3, **characterized in that** the salt of an inorganic or organic cation and an anionic surfactant is a fatty acid salt.

5. Composition according to Claim 4, **characterized in that** the fatty acid salt is selected from the group consisting of lithium stearate, magnesium stearate, sodium stearate, potassium stearate, calcium laurate, calcium ricinoleate, calcium stearate, barium laurate, barium ricinoleate, barium stearate, zinc octoate, zinc laurate, zinc ricinoleate and zinc stearate.

6. Composition according to any of the preceding claims, **characterized in that** the fatty acid salt is lithium stearate.

7. Composition according to any of the preceding claims, **characterized in that** the alcohol-binding metal oxide is aluminium oxide or magnesium oxide.

8. Composition according to Claim 7, **characterized in that** the aluminium oxide is present in the γ-, in the δ- or in the η-modification, as γ-AlO(OH), or in a mixture thereof.

9. Composition according to any of the preceding claims, **characterized in that** the composition further comprises a filler.

10. Composition according to any of the preceding claims, **characterized in that** the moisture-curable, silane-modified polymer comprises a polymer chain and at least one alkoxysilyl group bonded to the polymer chain, preferably a methoxy¬silyl group or an ethoxysilyl group.

11. Composition according to any of the preceding claims, **characterized in that** the moisture-curable, silane-modified polymer comprises a polymer chain and at least one silyl group bonded to the polymer chain, the polymer chain and the silyl group being joined to one another by a β-hydroxyamine group.

12. Composition according to Claim 11, **characterized in that** the silane-modified polymer has the formula (I): 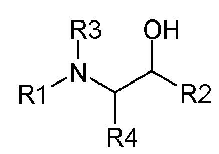 in which
R1 and R2 are the polymer chain or silyl group including an optionally present linker, and R1 ≠ R2,
R3 is hydrogen or a linear, branched or cyclic hydrocarbon radical, which may optionally be substituted and/or comprise a heteroatom and optionally form a ring with R1, and
R4 is hydrogen or a linear, branched or cyclic hydrocarbon radical which may optionally be substituted and/or comprise a heteroatom.

13. Composition according to any of the preceding claims, **characterized in that** the composition is free of phthalate, tin compounds, VOC and/or SVOC.

14. Use of the composition according to any of Claims 1 to 13 as a one-component adhesive and/or sealant and/or coating material.

15. Use of the composition according to any of Claims 1 to 13 as a two-component adhesive and/or sealant and/or coating material.

16. Use according to Claim 15, where
component A comprises part of the silane-modified polymer, the alcohol-binding metal oxide, and optionally none, part or the whole of the filler, and
component B comprises the remainder of the silane-modified polymer, the water donor substance surrounded by a surfactant shell, and optionally none, part or the whole of the filler.

## Revendications

1. Composition contenant
(A) un polymère modifié par silane, durcissable sous l'effet de l'humidité ;
(B) une substance libérant de l'eau, qui est entourée par une enveloppe tensioactive ; et
(C) un oxyde métallique liant les alcools.

2. Composition selon la revendication 1, **caractérisée en ce que** la substance libérant de l'eau est un sel métallique hydraté.

3. Composition selon l'une quelconque des revendications précédentes, **caractérisée en ce que** l'enveloppe tensioactive est choisie dans le groupe constitué par un sel d'un cation inorganique ou organique et d'un agent tensioactif anionique, d'un agent tensioactif non ionique, d'un agent tensioactif zwittérionique ou un sel d'un agent tensioactif cationique et d'un anion inorganique ou organique.

4. Composition selon la revendication 3, **caractérisée en ce que** le sel d'un cation inorganique ou organique et d'un agent tensioactif anionique est un sel d'acide gras.

5. Composition selon la revendication 4, **caractérisée en ce que** le sel d'acide gras est choisi dans le groupe constitué par le stéarate de lithium, le stéarate de magnésium, le stéarate de sodium, le stéarate de potassium, le laurate de calcium, le ricinoléate de calcium, le stéarate de calcium, le laurate de baryum, le ricinoléate de baryum, le stéarate de baryum, l'octoate de zinc, le laurate de zinc, le ricinoléate de zinc et le stéarate de zinc.

6. Composition selon l'une quelconque des revendications précédentes, **caractérisée en ce que** le sel d'acide gras est le stéarate de lithium.

7. Composition selon l'une quelconque des revendications précédentes, **caractérisée en ce que** l'oxyde métallique liant les alcools est l'oxyde d'aluminium ou l'oxyde de magnésium.

8. Composition selon la revendication 7, **caractérisée en ce que** l'oxyde d'aluminium se trouve sous forme de la modification γ, δ ou η, sous forme de γ -AlO(OH) ou d'un mélange de ceux-ci.

9. Composition selon l'une quelconque des revendications précédentes, **caractérisée en ce que** la composition contient en plus une charge.

10. Composition selon l'une quelconque des revendications précédentes, **caractérisée en ce que** le polymère modifié par silane, durcissable sous l'effet de l'humidité comprend une chaîne polymère et au moins un groupe alcoxysilyle lié à la chaîne polymère, de préférence un groupe méthoxysilyle ou éthoxysilyle.

11. Composition selon l'une quelconque des revendications précédentes, **caractérisée en ce que** le polymère modifié par silane, durcissable sous l'effet de l'humidité comprend une chaîne polymère et au moins un groupe silyle lié à la chaîne polymère, la chaîne polymère et le groupe silyle liés l'un à l'autre par un groupe β-hydroxyamine.

12. Composition selon la revendication 11, **caractérisée en ce que** le polymère modifié par silane présente la formule (I) : 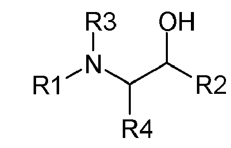 dans laquelle
R1 et R2 représentent la chaîne polymère ou le groupe silyle, y compris un lieur éventuellement présent, R1 ≠ R2,
R3 représente hydrogène ou un radical hydrocarboné linéaire, ramifié ou cyclique, qui peut éventuellement être substitué et/ou comprendre un hétéroatome et qui peut le cas échéant former un cycle avec R1, et
R4 représente hydrogène ou un radical hydrocarboné linéaire, ramifié ou cyclique, qui peut éventuellement être substitué et/ou comprendre un hétéroatome.

13. Composition selon l'une quelconque des revendications précédentes, **caractérisée en ce que** la composition est exempte de phtalate, de composés à base d'étain, de COV et/ou de COSV.

14. Utilisation de la composition selon l'une quelconque des revendications 1 à 13 comme adhésif et/ou substance d'étanchéité et/ou de revêtement à un composant.

15. Utilisation de la composition selon l'une quelconque des revendications 1 à 13 comme adhésif et/ou substance d'étanchéité et/ou de revêtement à deux composants.

16. Utilisation selon la revendication 15, où
le composant A contient une partie du polymère modifié par silane, l'oxyde métallique liant les alcools et ne contient éventuellement pas de charge, contient une partie de la charge ou la totalité de la charge, et
le composant B contient le reste du polymère modifié par silane, la substance libérant de l'eau, qui est entourée par une enveloppe tensioactive et ne contient éventuellement pas de charge, contient une partie de la charge ou la totalité de la charge.
